(19) Europäisches Patentamt
European Patent Office
Office européen des brevets

(11) **EP 4 027 636 A1**

(12) **EUROPEAN PATENT APPLICATION**

(43) Date of publication:
**13.07.2022 Bulletin 2022/28**

(21) Application number: **21275001.2**

(22) Date of filing: **11.01.2021**

(51) International Patent Classification (IPC):
***H04N 5/232*** *(2006.01)*

(52) Cooperative Patent Classification (CPC):
**H04N 5/23277**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **A METHOD AND APPARATUS FOR MODIFYING IMAGE**

(57)    A method to modify an image from a night vision camera is disclosed. The method comprises receiving at least one image from a night vision camera; modifying the at least one image, based on motion data from a tracker system and a shutter time of night vision camera, to remove smear from the image; and outputting the modified at least one image.

Figure 1

**Description**

BACKGROUND

Night vision cameras may be used in display systems to display an image to a user when light levels are too low for conventional visible light cameras. To maximise the sensitivity of the night vision camera, the shutter time is as long as practical. However, a long shutter time may lead to smear, as the user may move whilst the shutter is open. This reduces image quality and therefore users may miss critical details in the scenes captured by the night vision camera.

BRIEF DESCRIPTION OF DRAWINGS

Figure 1 illustrates a method to modify an image according to some examples.

Figure 2 illustrates a method to align and average two sequential images according to some examples.

Figure 3 illustrates a method to align and average an image over n sequential images according to some examples.

Figure 4 illustrates a method to filter an image according to some examples.

Figure 5a illustrates an image captured by a night vision camera.

Figure 5b illustrates the image after with simulated motion smear and noise applied.

Figure 5c illustrates the filtered image.

Figure 5d illustrates an averaged and filtered image.

Figure 6 illustrates a method to align, average and filter an image according to some examples.

Figure 7 illustrates a processing means according to some examples.

DETAILED DESCRIPTION

Night vision cameras (NVC) may be used when light levels are too low for conventional visible light cameras to display an image to a user with usable detail. In order to increase the amount of light received by the NVC, the shutter time may be maximised. However, this has an effect of inducing smear in the image when there is movement. Smear deteriorates the image and may obscure critical features in the image. This may reduce safety or user effectiveness when the NVC is used as part of a display system, especially in fast moving systems such as in head mounted displays or head up displays in aircraft or vehicles.

A typical approach to reduce smear may be to decrease the shutter time. However, decreasing the shutter time would likely increase the signal to noise ratio (SNR) of the image and in order to compensate for the reduced shutter time integration over a number of images may be required.

In many applications a known tracker system may be included. For example a head worn display comprises a tracker system to track the orientation of the display in its environment. Tracker systems may also be used on drones, where an image is provided to a user. The tracker system may output motion data related to the reference frame of the tracker system, and/or an object tracked by the tracker system. For example, in an example comprising a tracker system used to track a head mounted display on aircraft, the tracker system may track the motion of the aircraft and also the motion of the HWD in the aircraft. Typically, the object comprises the NVC. The motion data may be used to mitigate the effects of the smearing, as the tracker system may track the movement of the NVC.

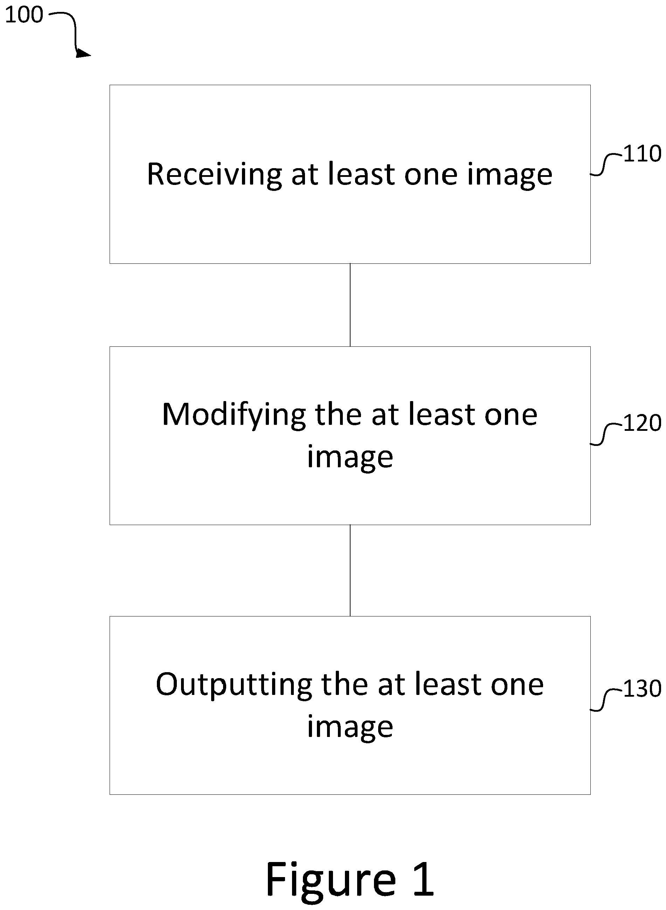

A method to mitigate smear without increasing SNR or decreasing the shutter time is described with relation to Figure 1, the method is referenced with reference sign 100. A processing means receives at least one image from a NVC 110. At substantially the same time the processing means may receive motion data from a tracker system associated with the NVC. The tracker system may track at least the orientation of the NVC or an object of known relation to the NVC. The tracker system may comprise a system similar to that described in PCT Publication WO 2017/042578, hereby incorporated by reference. Another appropriate tracking system may be used.

At 120 the processing means may modify the received image to remove smear from the image. The modification is based on the knowledge of the motion of the NVC and the shutter time of the NVC.

At 130 the modified image is output for display to a user. This may comprise sending the modified image to the display device. This may also comprise displaying the modified image to the user.

In some examples the image may be processed in substantially real-time such that the image displayed to the user is substantially instantaneous. In applications where the image is displayed to a user on a display in real time, the processing should be carried out on the display or helmet. This avoids extra latency. However, if real time use is not required the image may be processed at a different location to the display.

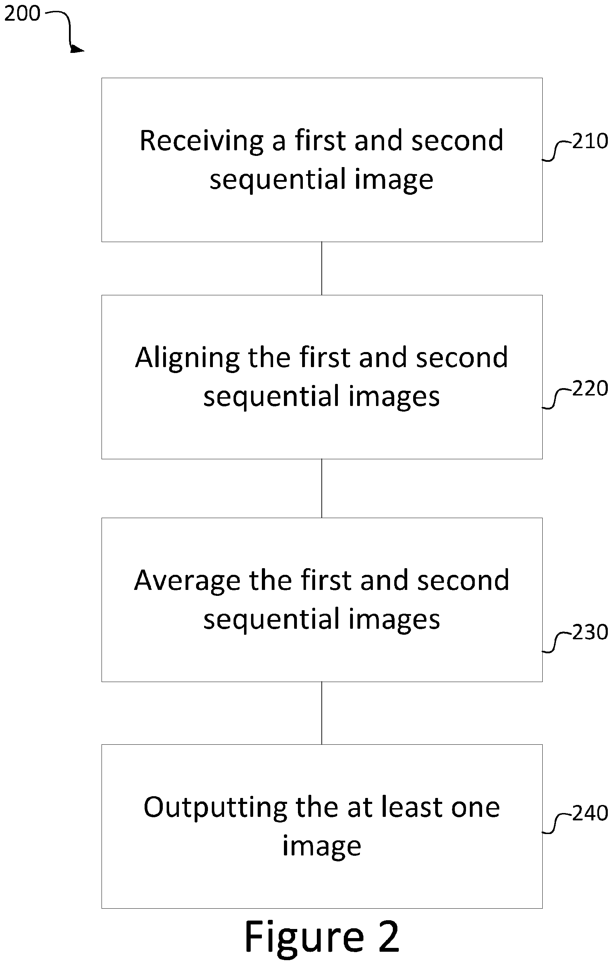

Figure 2 illustrates a method, 200, in accordance with some examples. At 210 a first sequential image and a second sequential image are received. The images may be received from two consecutive frames of the camera. However, depending upon the frame rate of the camera the frames may not be consecutive. The first sequential image and the second sequential image are received at a known time interval.

At 220 the first sequential image and the second sequential image are aligned based on the known time interval between the images, the shutter speed of the NVC and motion data provided by the tracker system. The motion data may comprise a change in orientation of the NVC which may allow the change in orientation of the images to be determined.

At 230 the aligned images may be averaged. In some examples averaging the images may comprise averaging the pixel intensities. Averaging pixels is also advantageous as it results in a reduction of other types of noise. For example averaging pixels may reduce the appearance of speckle in images.

At 240 the averaged image is output. The image may be output to a processing means, the processing means configured to provide instructions to cause a display the image to a user. In some examples outputting the image may comprise displaying the image to a user on a display.

In some examples the frame rate of the NVC may be equal to the frame rate of a display to display the image to the user. In some examples the frame rate of the NVC may be different from the frame rate of the display.

In some examples the known time interval between the first sequential image and the second sequential image may be less than the shutter speed. In some examples the known time interval between the first sequential image and the second sequential image may be different to the shutter speed.

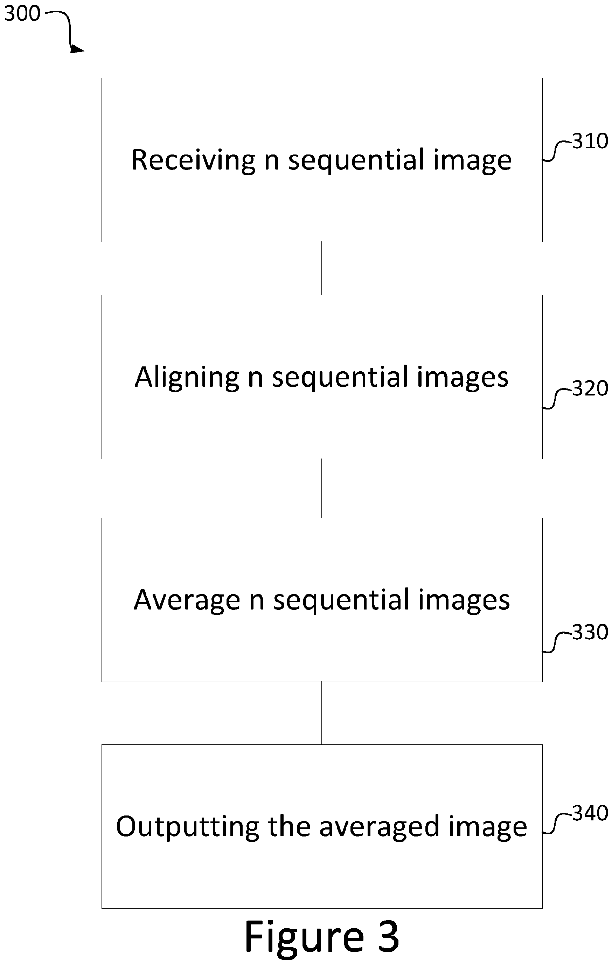

Figure 3 describes a method substantially similar to the method described with relation to Figure 2. At 310 n sequential images are received, where n is at least 2. The images may be received from two consecutive frames of the camera. However, depending upon the frame rate of the camera the frames may not be consecutive. The n sequential images are received at a known time interval.

At 320 the n sequential images are aligned based on the known time interval between the images, the shutter speed of the NVC and motion data provided by the tracker system. The motion data may comprise a change in orientation of the NVC which may allow the change in orientation of the images to be determined.

At 330 the aligned n images may be averaged. In some examples averaging the images may comprise averaging the pixel intensities.

At 340 the averaged image is output. The image may be output to a processing means, the processing means configured to provide instructions to cause a display the image to a user. In some examples outputting the image may comprise displaying the image to a user on a display.

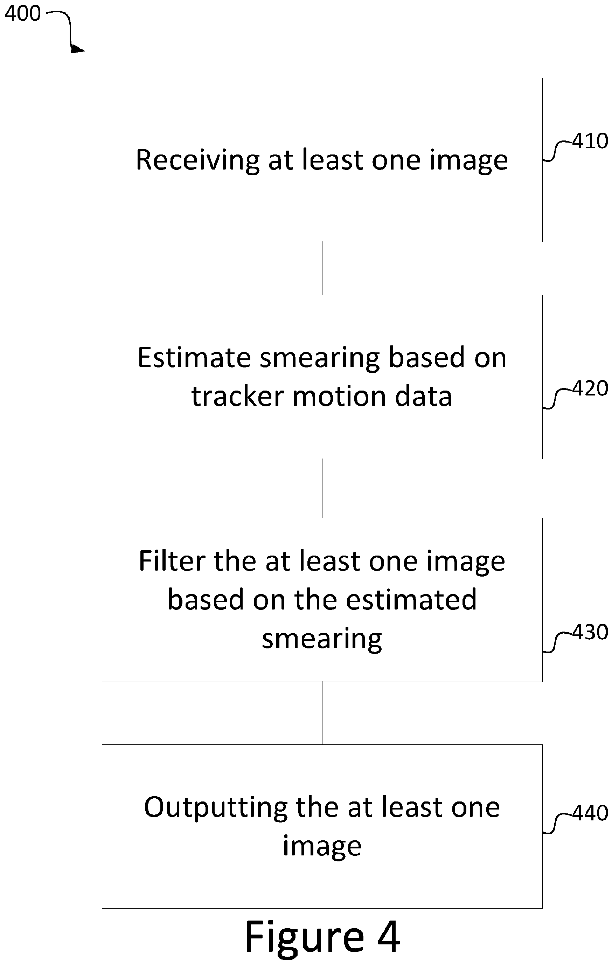

Figure 4 illustrates a method 400 in accordance with some examples. The method is substantially similar to the method described with reference to Figure 1. The method may be used independently of the method described with relation to Figures 2 and 3, or may be used in combination with the method described with relation to Figures 2 and 3.

Method 400 comprises, at 410, receiving an image. The image may be recorded using a NVC.

An estimate of smearing is made at 420 based on motion data from a tracker system. The motion data may comprise a change in orientation of the NVC during the shutter open time. The estimate of smearing may comprise a point spread function (PSF). The PSF is the function which represents the function by which the image was smeared.

The image is filtered, at 430, using a filter based on the estimate of the smearing. The filter may additionally be based on an estimate of noise in the image. The filter may comprise a Wiener filter. The image may be transformed prior to filtering. In some examples the transformation may comprise a discrete Fourier transform. Transforming the image prior to filtering may allow the image to be filtered more efficiently. A Wiener filter may be preferable to an inverse filter, as an inverse filter may amplify noise in the image resulting in a worse image. The Weiner filter reduces the amount of correction based on the level of noise, hence a compromise between fully correcting the image and but not adding too much noise.

At 440 the filtered image is output. The image may be output to a processing means, the processing means configured to provide instructions to cause a display the image to a user. In some examples outputting the image may comprise displaying the image to a user on a display. The image may be output still in the transformed domain and the inverse transform performed at a later point, or may be transformed back into the original domain using an inverse transformation. In some examples the transformation may comprise an inverse Fourier transformation or a discrete inverse Fourier transformation.

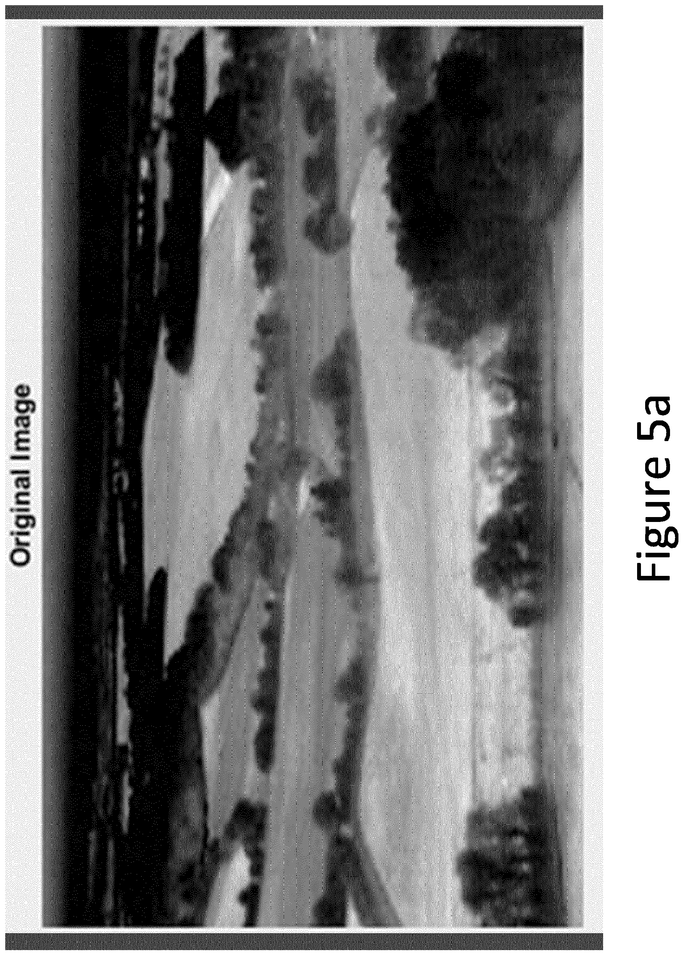

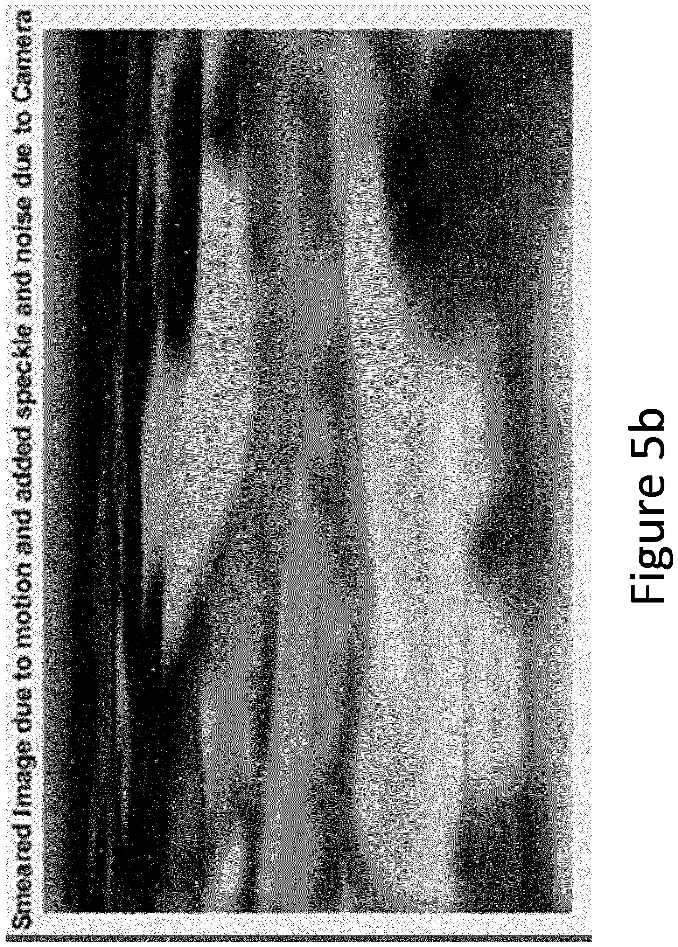

A filtered image using the method 400 is illustrated in Figures 5a-c. Figure 5a represents an image recorded by a night vision camera without any significant smearing. In Figure 5b the image has had smear and random noise and speckle applied to it to simulate what an user of a NVC may observe when seeing a smeared image. The noise and speckle is independent of motion, and smearing is motion dependent.

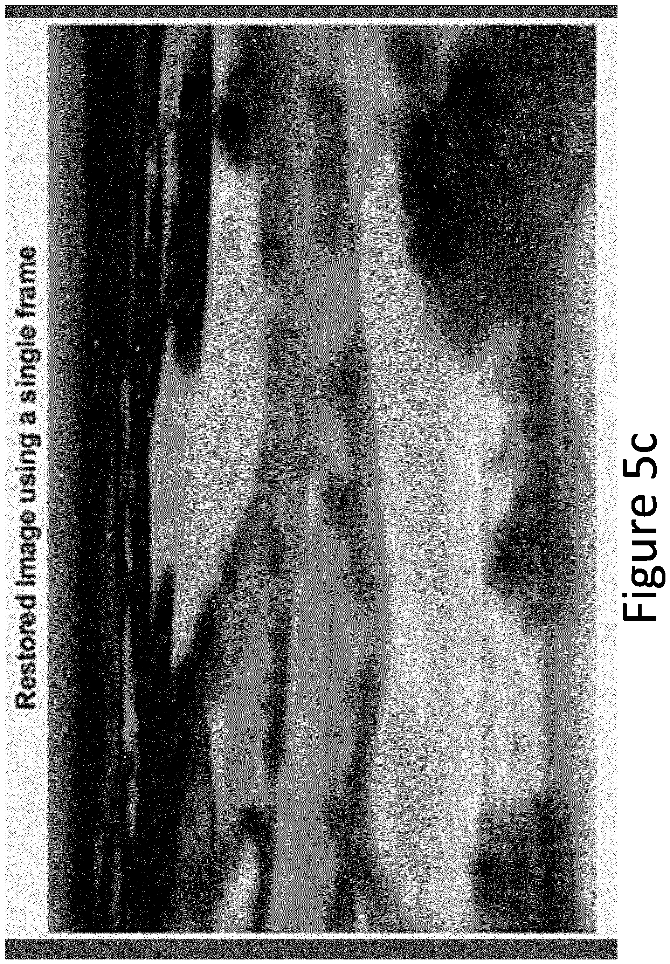

Figure 5c illustrates the image when the image has been filtered using a method substantially as described with reference to Figure 4. As can be observed in Figure 5c the smearing is substantially reduced. However, as the noise is independent of motion of the NVC, the noise has been smeared.

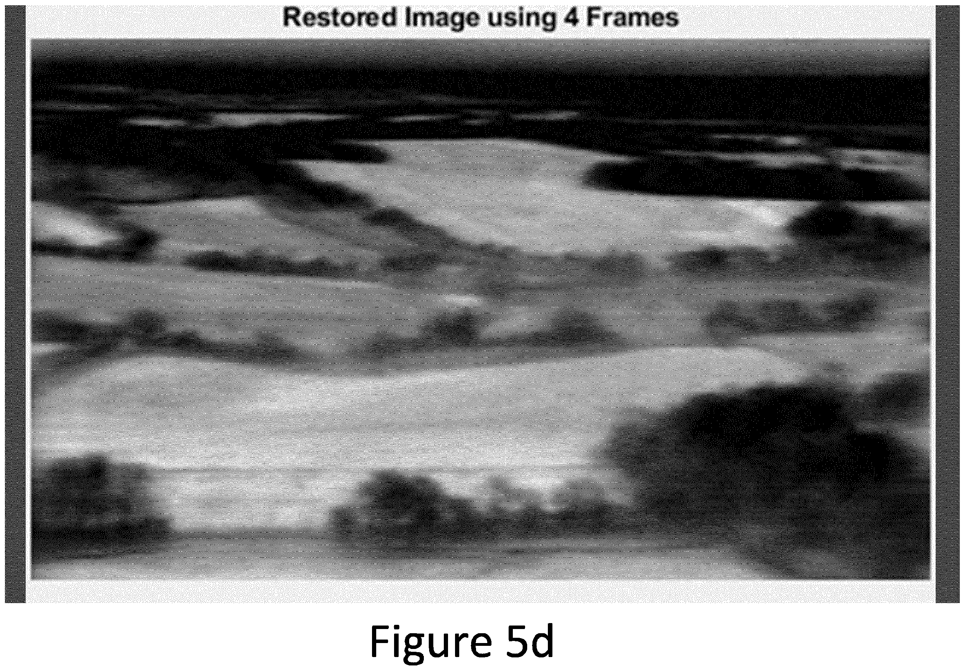

The presence of noise may reduce the effectiveness of the filtering process. To reduce the impact of noise the image may be filtered prior to passing the averaged image to the filter. Figure 5d illustrates an image where the four frames have been aligned and averaged prior to filtering. As can be seen in Figure 5d the appearance of speckle is reduced compared to Figures 5b and 5c, and more detail of the image is viewable.

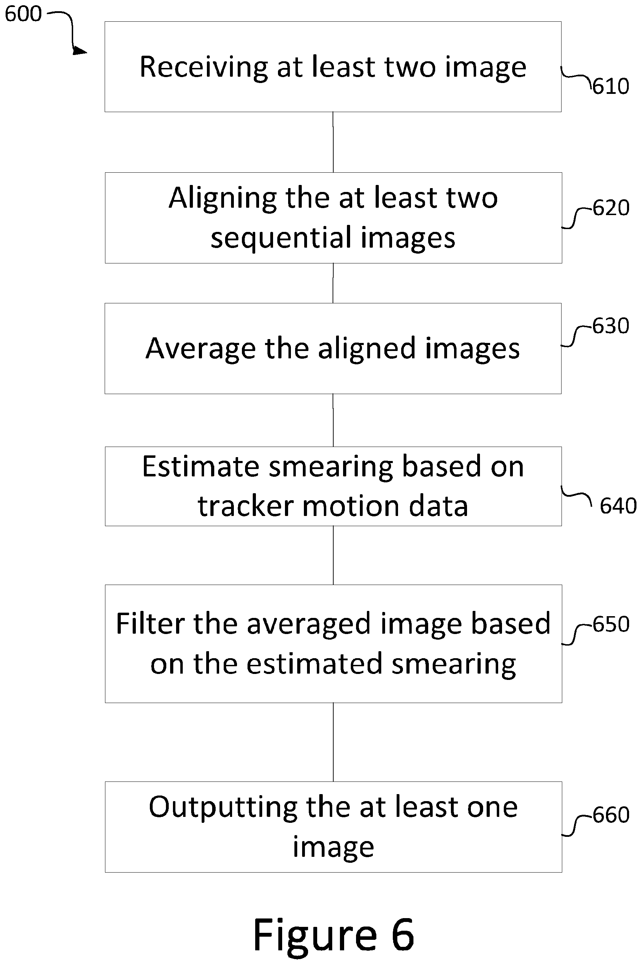

A method to average sequential images and filter the averaged image is illustrated in Figure 6. The method 600 comprises, at 510, receiving at least two sequential images. The images may be received from two consecutive frames of the camera. However, depending upon the frame rate of the camera the frames may not be consecutive. The at least two sequential images are received at a known time interval.

At 620 the at least two sequential images are aligned based on the known time interval between the images, the shutter speed of the NVC and motion data provided by the tracker system. The motion data may comprise a change in orientation of the NVC which may allow the change in orientation of the images to be determined.

At 630 the aligned images may be averaged. In some examples averaging the images may comprise averaging the pixel intensities.

An estimate of smearing is made at 640 based on motion data from a tracker system. The motion data may comprise a change in orientation. The change may comprise a delta angle value or may comprise an angular rate. The estimate of smearing may comprise a point spread function (PSF). The PSF is the function which represents the function by which the image was smeared.

The image is filtered, at 650, using a filter based on the estimate of the smearing. The filter may additionally be based on an estimate of noise in the image. The filter may comprise a Wiener filter. The image may be transformed prior to filtering. In some examples the transformation may comprise a discrete Fourier transform. Transforming the image prior to filtering may allow the image to be filtered more efficiently.

At 660 the averaged image is output. The image may be output to a processing means, the processing means configured to provide instructions to cause a display the image to a user. In some examples outputting the image may comprise displaying the image to a user on a display. The image may be output still in the transformed domain, or may be transformed back into the original domain. In some examples the transformation may comprise an inverse Fourier transformation.

The Wiener filter may be used to estimate the optimum image as follows:

$$\hat{F}(u,v) = \left(\frac{1}{H(u,v)} \frac{|H(u,v)|^2}{|H(u,v)|^2 + K}\right) G(u,v)$$

where:

G(u, v) is the discrete fourier transform (DFT) of the captured image,
$\hat{F}$(u, v) is the DFT of the estimated corrected image,
H(u, v) is the DFT of the PSD (power spectral density) causing the smearing,

$$K = \frac{S_\eta(u,v)}{S_f(u,v)},$$

$S_\eta$(u, v) is the power spectrum of the noise,
$S_f$(u, v) is the power spectrum of the image (without smear or noise).

K is pre-calculated prior to use of the system, $S_f$(u, v) is estimated based on a typical image and $S_\eta$(u, v) is calculated based on the known (estimated) noise performance of the camera. Typically K may be adjusted to optimise the trade-off between final image noise and the sharpness of the image. K may also be adjusted to take into account the differing noise levels depending on the electronic gain of the camera. I.e. at lower light levels where the gain of the camera is increased, K is increased to increase the emphasis on smoothing.

The final image is calculated by performing an inverse DFT on $\hat{F}$(u, v).

To decrease the amount of spatial ringing due to the edge effects of the DFT, the image may be blurred at the edges prior to performing the DFT.

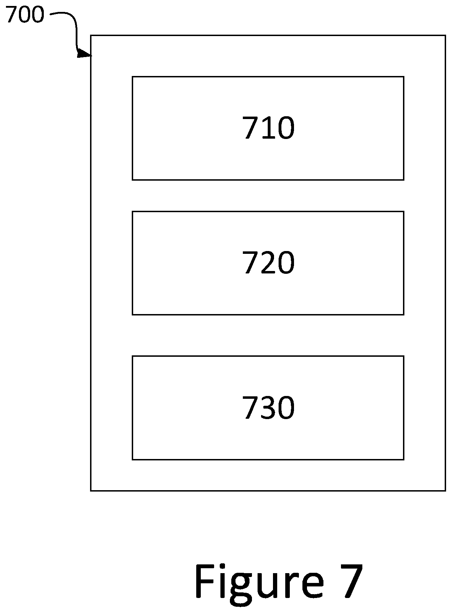

Figure 7 illustrates a processing means 700 according to some examples. The processing means 700 comprises a first circuitry 710, a second circuitry 720 and a third circuitry 730.

The first circuitry 710 is configured to receive receiving at least one image from a night vision camera.

The second circuitry 720 is configured to modify the at least one image, based on motion data from a tracker system and a shutter time of the night vision camera, to remove smear from the image.

The third circuitry 730 is configured to output the modified at least one image.

The second circuitry 720 may be configured to align at least two sequential images based on motion data from the tracker system, and after aligning the at least two sequential images, averaging pixel intensities over the aligned at least two sequential images.

Aligning the at least two sequential images based on motion data from the tracker system may comprise calculating a change in rotation of the night vision camera between the at least two sequential images.

The second circuitry 720 may be configured to apply a filter to the at least one image, wherein the filter coefficients of the filter are based on motion data from the tracker system.

The second circuitry 720 may be configured to average pixel intensities over the at least two sequential images prior to applying the filter.

In some examples the filter may comprise a Weiner filter.

In some examples the frame rate of night vision camera is higher than a display system frame rate.

In some examples a field of view of the night vision camera is larger than a field of view of a display to display the modified image to a user.

In some examples the second circuitry 720 may be configured to estimate a point spread function associate with the at least one image.

In some examples the second circuitry 720 may be configured to estimate a measure of noise in the image.

In some examples the motion data comprises an orientation of the night vision camera.

Although the above techniques have been described with reference to night vision cameras, the methods are applicable to any type of camera where smearing is caused by motion of the camera whilst the shutter is open and the speed of the motion is comparable to the shutter time of the camera. In some examples the methods described may be applied to a night vision camera on a head mounted display on an aircraft, by leveraging the existing head tracking system. In some examples the methods may also be applied to a camera on a moving platform, such as a drone which comprises tracking software.

It is also understood that a camera may not have a mechanical shutter, and as such shutter speed or time may refer to an electronic shutter the time that the sensors detect light in a frame. The methods are equally applicable to a mechanical or an electronic shutter.

**Claims**

1. A method comprising:

    receiving at least one image from a night vision camera;
    modifying the at least one image, based on motion data from a tracker system and a shutter time of night vision camera, to remove smear from the image; and
    outputting the modified at least one image.

2. The method according to claim 1, wherein the at least one image comprises at least two sequential images, and correcting the at least one image comprises aligning the at least two sequential images based on motion data from the tracker system, and after aligning the at least two sequential images, averaging pixel intensities over the aligned at least two sequential images and optionally wherein aligning the at least two sequential images based on motion data from the tracker system comprises calculating a change in rotation of the night vision camera between the at least two sequential images.

3. The method according to any preceding claim, wherein correcting comprises applying a filter to the at least one image, wherein the filter coefficients of the filter are based on motion data from the tracker system and the shutter time of night vision camera.

4. The method according to claim 3 when dependent upon claim 2, wherein correcting comprises averaging pixel intensities over the at least two sequential images prior to applying the filter and optionally wherein the filter comprises a Weiner filter.

5. The method according to any preceding claim, wherein a frame rate of night vision camera is higher than a display system frame rate.

6. The method according to any preceding claim, wherein a field of view of the night vision camera is larger than a field of view of a display to display the modified image to a user.

7. The method according to any preceding claim, wherein modifying the at least one image further comprises estimating a point spread function associate with the at least one image.

8. The method according to any preceding claim, wherein modifying the at least one image further comprises estimating a measure of noise in the image.

9. The method according to any preceding claim, wherein the motion data comprises an orientation of the night vision camera.

10. The method according to any preceding claim, further comprising applying a Fourier transform to the at least one image prior to modifying the at least one image based on motion data, wherein the Fourier transform is optionally a discrete Fourier transform.

11. The method according to any preceding claim, further comprising applying an inverse Fourier transform to the modified image, wherein the inverse Fourier transform is optionally an inverse discrete Fourier transform.

12. A processing means comprising:

    a first circuitry configured to receive receiving at least one image from a night vision camera;
    a second circuitry configured to modify the at least one image, based on motion data from a tracker system and a shutter time of the night vision camera, to remove smear from the image; and
    a third circuitry configured to output the modified at least one image.

13. The processing means according to claim 12, wherein the second circuitry is configure to align at least two sequential images based on motion data from the tracker system, and after aligning the at least two sequential images, the second circuitry is configure to average pixel intensities over the aligned at least two sequential images.

**14.** The processing means according to claim 12 or 13, wherein the second circuitry is configured to apply a filter to the at least one image, wherein the filter coefficients of the filter are based on motion data from the tracker system.

**15.** A computer-readable medium comprising instructions, that when executed, cause a processing means to perform the method of any of claims 1-13.

100

```
┌────────────────────────────────────┐
│                                      │
│   Receiving at least one image       │  ⌐110
│                                      │
└────────────────────────────────────┘
                    │
┌────────────────────────────────────┐
│                                      │
│   Modifying the at least one         │  ⌐120
│            image                     │
│                                      │
└────────────────────────────────────┘
                    │
┌────────────────────────────────────┐
│                                      │
│   Outputting the at least one        │  ⌐130
│            image                     │
│                                      │
└────────────────────────────────────┘
```

# Figure 1

200

Receiving a first and second sequential image ~210

Aligning the first and second sequential images ~220

Average the first and second sequential images ~230

Outputting the at least one image ~240

## Figure 2

300

Receiving n sequential image — 310

Aligning n sequential images — 320

Average n sequential images — 330

Outputting the averaged image — 340

# Figure 3

400

Receiving at least one image — 410

Estimate smearing based on tracker motion data — 420

Filter the at least one image based on the estimated smearing — 430

Outputting the at least one image — 440

## Figure 4

Original Image

Figure 5a

Smeared Image due to motion and added speckle and noise due to Camera

Figure 5b

**Restored Image using a single frame**

Figure 5c

EP 4 027 636 A1

Restored Image using 4 Frames

Figure 5d

600

| Receiving at least two image | 610 |

| Aligning the at least two sequential images | 620 |

| Average the aligned images | 630 |

| Estimate smearing based on tracker motion data | 640 |

| Filter the averaged image based on the estimated smearing | 650 |

| Outputting the at least one image | 660 |

## Figure 6

700

710

720

730

Figure 7

Europäisches
Patentamt
European
Patent Office
Office européen
des brevets

# EUROPEAN SEARCH REPORT

**Application Number**

EP 21 27 5001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 830 360 B1 (BURT PETER JEFFREY [US] ET AL) 9 September 2014 (2014-09-09) * column 1, line 57 - column 2, line 7 * * column 4, line 62 - column 7, line 39; figures 1,2A-C, 3A, 3B * | 1-15 | INV. H04N5/232 |
| X | US 8 823 809 B1 (JENSEN DAVID W [US] ET AL) 2 September 2014 (2014-09-02) * column 1, line 45 - line 47 * * column 2, line 49 - column 3, line 39; figures 1, 2 * | 1-15 | |
| A | US 8 446 503 B1 (KOENCK STEVEN E [US] ET AL) 21 May 2013 (2013-05-21) * column 4, line 4 - column 5, line 24 * | 1-15 | |
| A | RAJAKARUNA NIMALI ET AL: "Inertial data based deblurring for vision impaired navigation", 2014 INTERNATIONAL CONFERENCE ON INDOOR POSITIONING AND INDOOR NAVIGATION (IPIN), IEEE, 27 October 2014 (2014-10-27), pages 416-420, XP033217986, DOI: 10.1109/IPIN.2014.7275510 [retrieved on 2015-09-24] * Section II and III * | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 19 May 2021 | Bakstein, Hynek |

EPO FORM 1503 03.82 (P04C01)

**EP 4 027 636 A1**

## ANNEX TO THE EUROPEAN SEARCH REPORT
## ON EUROPEAN PATENT APPLICATION NO.

EP 21 27 5001

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2021

| Patent document cited in search report | | Publication date | Patent family member(s) | Publication date |
|---|---|---|---|---|
| US 8830360 | B1 | 09-09-2014 | NONE | |
| US 8823809 | B1 | 02-09-2014 | NONE | |
| US 8446503 | B1 | 21-05-2013 | NONE | |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017042578 PCT